Europäisches Patentamt

(19) European Patent Office

Office européen des brevets

(11) Publication number: **0 329 455**
**A1**

(12) # EUROPEAN PATENT APPLICATION

(21) Application number: **89301538.8**

(22) Date of filing: **17.02.89**

(51) Int. Cl.⁴: **A 47 C 1/024**
**B 64 D 25/04**

(30) Priority: **19.02.88 US 157893    20.05.88 US 196869**

(43) Date of publication of application:
**23.08.89 Bulletin 89/34**

(84) Designated Contracting States: **DE FR GB IT SE**

(71) Applicant: **AERO TECHNOLOGY, INC,**
**25139 Avenue Stanford**
**Valencia California 91355 (US)**

(72) Inventor: **Selzer, Gunther**
**Gartenstrasse 9**
**D-5603 Wuelfrath (DE)**

(74) Representative: **Mayes, Stuart David et al**
**BOULT, WADE & TENNANT 27 Furnival Street**
**London, EC4A 1PQ (GB)**

(54) **An actuator assembly and adjusting and locking apparatus.**

(57) Apparatus for adjusting and locking the inclination of the backrest (13) of a seat, for example an aircraft seat (10), comprises a gas compression spring (16) which acts between the back rest (13) and the frame (12) of the seat and which is of the type which has a locking and release member (30), which, when pressed frees the spring (16) to expand or to be compressed and when released locks the spring in any position in which it is set to lock the back rest (13). The locking and release member (30) is operated by a button (25) fitted in an arm rest (14) of the seat. To enable the button (25) to operate the locking and release member (30) entirely mechanically, the button (25) is connected to one end of a Bowden cable (18) through a first lever (40) and the other end of the Bowden cable (18) is connected to the locking and release member (30) through a second lever (27). The two levers together provide a mechanical advantage of 8:1 between the force applied to the button (25) and that acting on the locking and release member (30).

The gas compression spring (16) has a low melting point plug (87) which melts in the event of a fire to discharge compressed gas (73) in the gas spring and thereby allow for the expansion of working liquid in the gas spring. In one preferred embodiment, the compressed gas contains a fire retardant such as Halon 1301.

FIG. 1.

EP 0 329 455 A1

**Description**

## AN ACTUATOR ASSEMBLY AND ADJUSTING AND LOCKING APPARATUS

This invention relates to an actuator assembly and adjusting and locking apparatus, particularly though not exclusively for adjusting and locking the angular position of one member with respect to another which is especially applicable to the adjustment in inclination of the backrest of a seat, for example, an aircraft or railway seat.

Existing adjustable backrests for seats used in aircraft usually incorporate an hydraulic piston cylinder unit in conjunction with mechanical springs for adjusting the inclination of the backrest and the locking thereof in a desired position. The springs are provided to restore the backrest to its starting position when it is unloaded. The push button is mounted on the armrest and, when activated, releases the piston cylinder unit and the piston rod therein is displaced by the force of the springs acting on the unit. When the push button is released, the piston cylinder unit locks any further movement of the backrest. In this manner a seat back can be adjusted and locked as desired within a predetermined angular range.

The hydraulic piston cylinder unit together with the spring system is complicated and time consuming to install. However, these hydraulic piston cylinder units have been used almost exclusively in aircraft seating. One of the important advantages of these prior units was that little force was necessary to operate the push button and this allowed children and the physically impaired to actuate the device.

The present invention aims to overcome the problems of prior art actuator assemblies and in accordance with a first aspect the invention provides an actuator assembly having an elongate housing and an inner working chamber therein, and comprising first and second pistons slidably disposed within the inner working chamber and dividing the inner working chamber into three separate chambers, an intermediate chamber between the first and second pistons, and firt end chamber adjacent the side of the first piston opposite the side adjacent the intermediate chamber and a second end chamber adjacent the side of the second piston opposite the side adjacent the intermediate chamber, the intermediate chamber and the first end chamber adapted to be filled with working liquid and the second end chamber adapted to be filled with compressed gas, a piston rod secured at one end thereof to the first piston and the other end thereof extending out of the elongate housing, valve means to control the flow of working liquid between the intermediate chamber and the first end chamber, and a conduit in fluid communication between the second end chamber and the exterior of the housing which is blocked off by a plug disposed therein, the plug being made of material which melts at a predetermined temperature thereby to unblock the conduit and permit the escape of compressed gas from the second end chamber.

In another aspect, the invention provides an actuator assembly having an elongate housing and an inner working chamber therein, and comprising at least one piston slidably disposed within the inner working chamber and dividing the inner working chamber into at least two separate chambers, said chambers adapted to be filled with working fire retardant fluid, a piston rod secured at one end thereof to the piston and the other end thereof extending out of the elongate housing, valve means to control the flow of working fluid between the two chambers, a conduit in fluid communication between one of the two chambers and the exterior of the housing, and a low melting point plug disposed in the conduit action normally to prevent the escape of said working fluid and operable at a predetermined temperature to allow said working fluid to exhaust from the chambers.

In the preferred embodiment according to this aspect of the invention, the working fluid contains brominated, fluorinated hydrocarbons and is gaseous at ambient conditions, and must be maintained under substantial pressure (e.g., 15-30 bars) in order to stay in the liquid phase. Preferably, substantially all of the working fluid is a brominated, fluorinated hydrocarbon, such as bromotrifluoromethane and dibromodifluoromethane or mixtures thereof.

In another aspect the invention provides apparatus for the adjustment and locking in position of a first member movably mounted relative to a second member, said apparatus including a pressure fluid operated device, eg gas compression spring, adapted to act between said first member and said second member, said device including a movable locking and release member and means for moving said locking and release member between a release position in which said device is free to expand or to be compressed and a locking position in which said device is locked rigid, said means for moving said locking and release member including a manually operated push-button and a mechanical connecting means operatively connecting said push-button to said locking and release member, said connecting means including a first lever and means eccentrically loading said first lever for movement by said push-button.

An advantage of this aspect of the invention is that it enables the length of the lever acting on the locking and release member of the gas compression spring in the preferred embodiment to be reduced sufficiently for this lever to be housed within the specified, limited space of the seat. In particular, with a first lever ratio at the release button of 2:1, the installation depth within the limited dimensions of the arm rest can easily by achieved. For example, a gas compression spring suitable for standard seats must have a restoring force of approximately 350 N. The necessary release force at the locking and release member is then about 130 N. The desired release force at the push-button in the arm rest should, for a release travel of 10mm, not exceed 20 N to 30 N and preferably be only 15 N. This can be achieved with two levers having an overall transmission ratio of the levers of approximately 1;8, the total transmission ratio being already reduced by one half by the off-centre application of the force via the first lever at the push-button in a ratio of 2;1. Depending upon the construction of the lever in the arm rest, the release force at the spring can be reduced solely by the lever at the push-button sufficiently for the desired easy operation to be possible.

In a further aspect, the invention provides apparatus for adjusting and locking the position of one member with respect to another member, comprising a pressure fluid operated device, eg gas spring assembly, having an elongate housing which is secured to one of said members and a piston rod extending out of the housing having a valve release actuator thereon and being secured to the said other member, a remote actuating device having a push button, a pivotally mounted two-arm crank, one of said arms operatively engaging the back side of the push button and the other arm receiving one end of an operating cable, and a lever actuating assembly mounted to one of said members and including a mounting element, a lever arm pivotally mounted at one end thereof to the mounting element and having the other end of the operating cable removably secured to the free end of the lever arm, means on the lever arm to engage the valve release actuator on the piston rod, the mounting element having a first opening to receive the free end of the piston rod, a slotted receptacle adjacent and perpendicular to the first opening and adapted to receive a spring clip, the spring clip sliding through the receptacle to be mounted about a circumferential groove provided in the free end of the piston rod to thereby retain the free end of the piston rod in position so that movement of the operating cable caused by pressing on the push button of the remote actuating device will cause the lever arm to pivot and the means thereon to engage the valve release actuator to open a valve and allow movement of pressure fluid within the device.

It will be understood that it is quite possible to take the features of one aspect of the invention and combine them with features according to another or some other aspects of the invention.

By way of example, embodiments of the invention will now be described with reference to the accompanying drawings, in which:

FIG. 1 is a side view with parts exposed of a passenger seat embodying features of the invention;

FIG. 2 is a cross-sectional view of a gas spring and lever actuating assembly shown in FIG. 1;

FIG. 3 is a cross-sectional view of a remote actuating unit taken along the lines of 3-3 shown in FIG. 1;

FIG. 4 is a cross-sectional view taken along the lines of 4-4 of the remote actuating unit shown in FIG. 3;

FIG. 5 is a perspective view of the connection between the operating cable, a lever actuating assembly, and the gas spring shown in FIG. 1;

Figure 6 is a side view of an alternative embodiment;

Figure 7 is an exploded perspective view of parts of the device of Figure 6;

Figure 8 is an exploded perspective view of parts of the device of Figure 6;

Figure 9 is a perspective exploded view of a further alternative embodiment; and

Figure 10 is an exploded view of parts of the device of Figure 9.

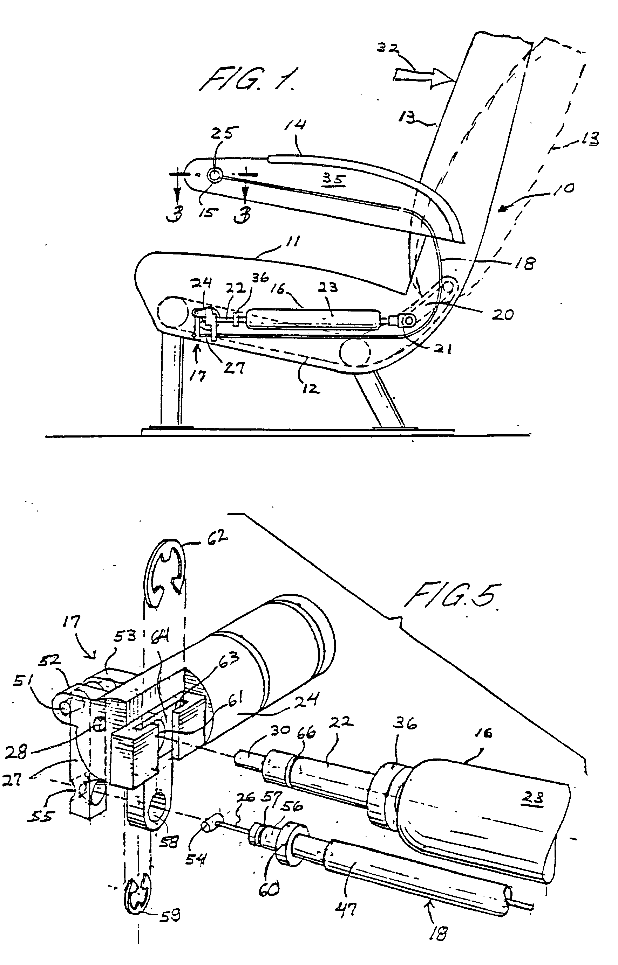

Reference is made to FIG. 1 which illustrates a passenger seat 10 embodying features of the invention. The seat 10 comprises a horizontal portion 11 supported by an underlying frame 12 shown partially in phantom and a back portion 13 which is pivotally connected to underlying frame 12. Armrests 14 are provided on each side of the backrest 13.

The system for adjusting and locking the position or inclination of the back portion 13 generally comprises a remote actuating unit 15 positioned within the armrest 14, a gas spring 16, and a lever actuating assembly 17 located in the horizontal seat portion 11,and an operating cable assembly 18 connected between the remote actuating unit 15 and the lever actuating assembly 17.

The gas spring 16 is secured on one end thereof to the extension element 20 on the pivotally mounted back portion 13 by means of a forked head fixture 21. A piston rod 22 extends out of the other end of the gas spring 16 and the end extending out of the housing 23 is releasably connected to the mounting member 24 of the lever actuating assembly 17.

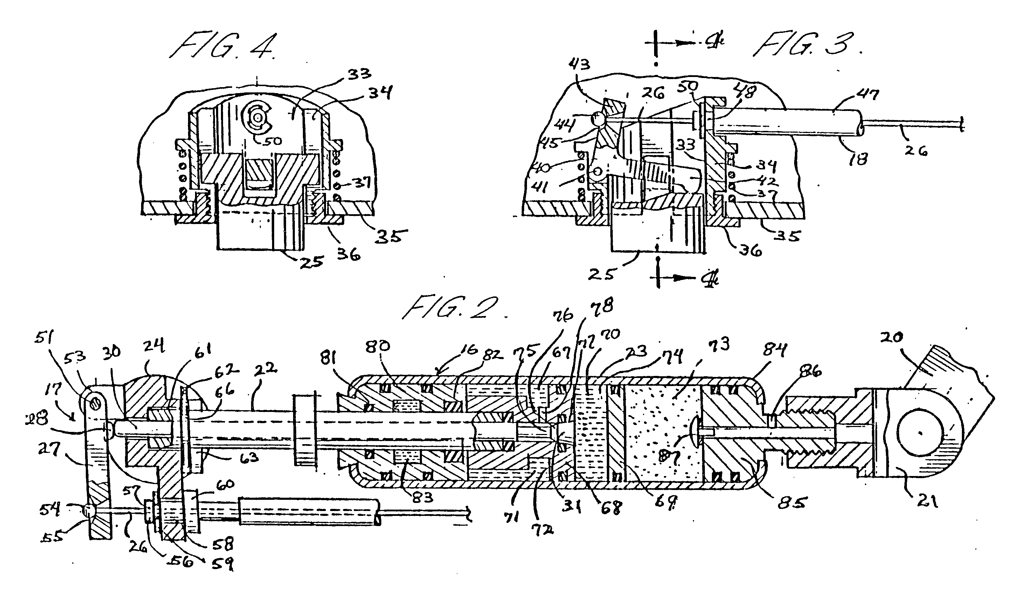

Inward movement of the push button 25 of the remote actuating unit 15 pulls cable element 26 in the operating cable 18 which in turn causes the lever 27 on the lever actuating assembly 17 to be pulled toward the end of the piston rod 22 so the button 28 engages the valve release rod 30 slidably mounted within the piston rod 22. Inward pressure on the release rod 30 releases a valve body 31 (shown in FIG. 2) within the gas spring 16 which allows movement of the piston rod 22 inwardly and outwardly of the gas spring housing 23. If a force is applied to the backrest 13, as indicated by arrow 32, with the valve body 31 in the release position, the gas spring housing 23 will be urged toward the lever actuating assembly 17 thereby allowing the backrest 13 to move into an inclined position shown in phantom in FIG. 1. If there is no force applied to the backrest 13, the pressure within the gas spring 16 will urge the gas spring housing 23 away from the lever actuating assembly 17 and result in the backrest 13 moving to an upright position. Removing the pressure from the push button 25 in the remote actuating unit 15 disengages the valve release rod 30 to lock the gas spring 16 and thus locks the backrest 13 in its position at the time of the disengagement.

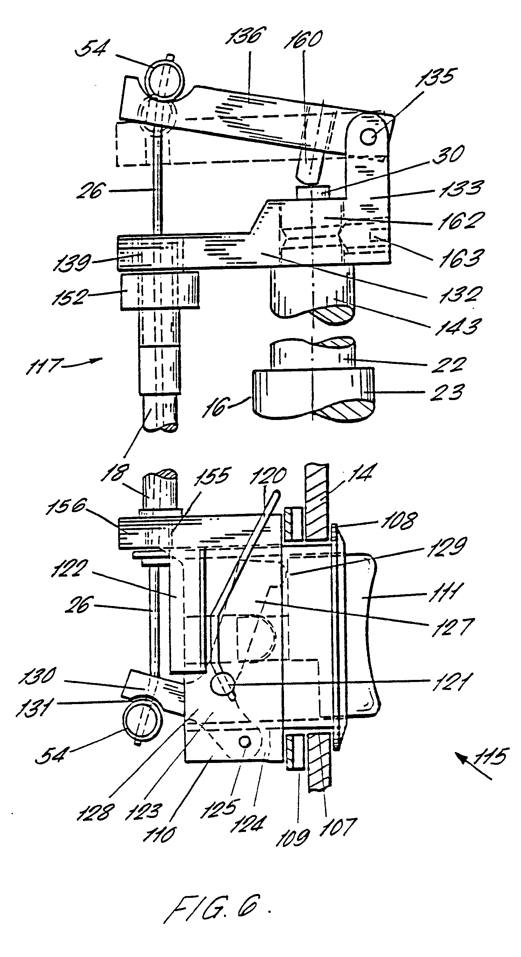

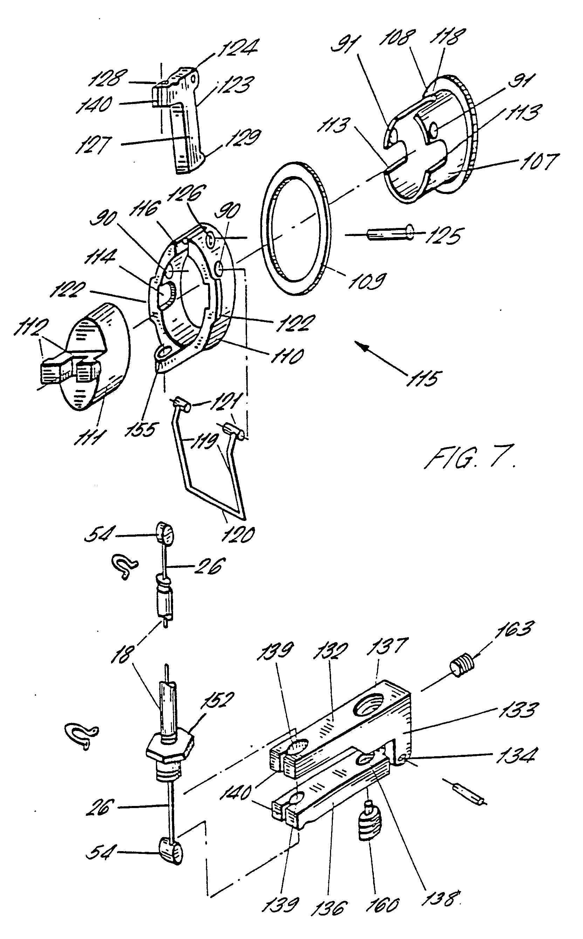

The remote actuating unit 15, shown in detail in FIGS. 3 and 4, generally comprises a push button 25 which is slidably mounted within a cylindrical bore 33 of housing 34 secured to side panel 35 of the armrest 14 by means of a threaded or bayonet type collar 36. A compressed spring 37 is provided to apply tension between the housing 34 and the connected collar 36 to maintain the proper position thereof within the side panel 35. A two-arm crank 40 is pivotally mounted by pin 41 in the housing 34. One arm 42 of the crank 40 is urged against the back side of the push button 25 and the other arm 43 is adapted to releasably receive an end of the cable element 26 in operating cable 18. The cable element 26 has a small cylindrical body 44 on the end thereof adapted to be seated within a concave recess 45 provided in the far side of crank arm 43. The arm 43 has a slot (not shown) in the side thereof to the recess 45 so that the cable element 26 can be inserted therethrough to place the cylindrical body 44 within the concave recess 45. The end of covering 47 of the operating Bowden cable 18 is provided within fitting 48 which passes through an opening in the housing 34 and a circumferential groove (not shown) is provided in the periphery of the fitting in order to receive a spring clip 50 which secures the end of the operating cable 18 in proper position within the housing 34 and prevents the removal therefrom.

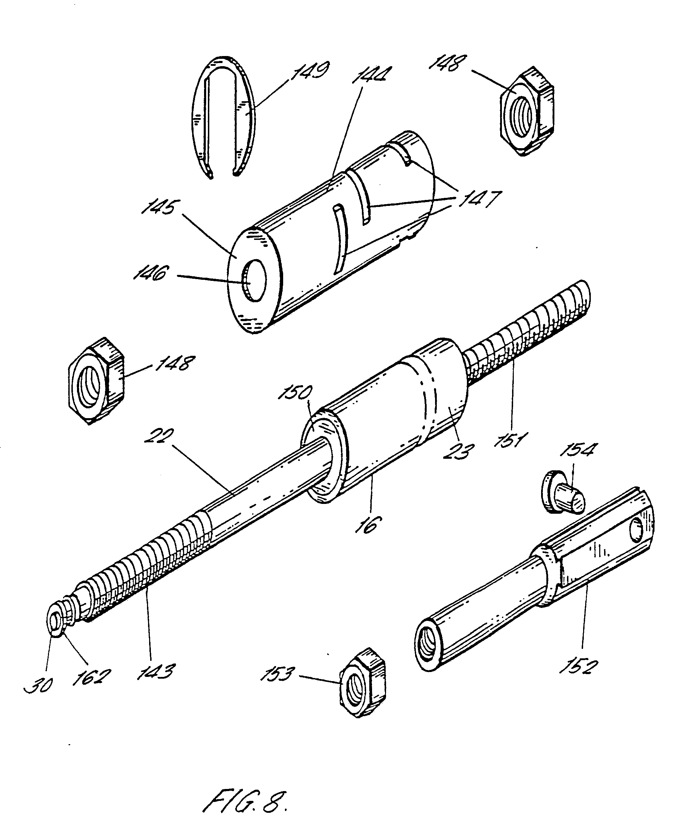

The lever actuating assembly 17, best shown in FIGS. 2 and 5, generally comprises a mounting member 24 which is secured to the frame 12 (shown partially in phantom) supporting the horizontal seat portion 11. Lever arm 27 is pivotally mounted about pin 51 at one end thereof to ears 52 and 53 of the mounting member 24. The free end of lever arm 27 is adapted to receive the end of the cable element 26 in a manner similar to the cable connection in remote actuating unit 15. A cylindrical body 54 is provided on the end of the cable element 26 which is adapted to be seated within the concave recess 55 provided in the opposite face of the lever arm 27. A slotted opening (not shown) is provided in the side of the free end of lever arm 27 to the recess 55 to allow the cable element 26 to be inserted in order to place the cylindrical body 54 into the concave recess 55. A fitting 56 within a groove 57 in the periphery thereof passes through opening 58 and a spring clip 59 engages the groove 57 to hold the fitting. A threaded collar 60 is provided to be tightened against the mounting member 24 in the side opposite the spring clip 59 to fix the end of the cable 18 to the mounting member 24 and to adjust the length of the cable so that button 28 has direct contact with release rod 30.

The free end of piston rod 22 which extends out of the gas spring housing 23 is seated within opening 61 provided in mounting member 24 and a spring clip 62 is inserted through the slotted opening 63 of the receiving receptacle 64, as shown best in FIG. 5, and engages a groove 66 in the periphery of the piston rod 22 to thereby fix the free end within the receptacle 64. A valve release rod 30 slidably mounted in an axial bore within the piston rod 22 extends out of the free end of the piston rod 22 and is engaged by pressing element or button 28 on the inside of the lever arm 27 when the lever arm is pulled by cable element 26. This pushes the valve release rod 30 into piston rod 22 to activate a valve body 31 within the gas spring housing 23, shown in FIG. 2.

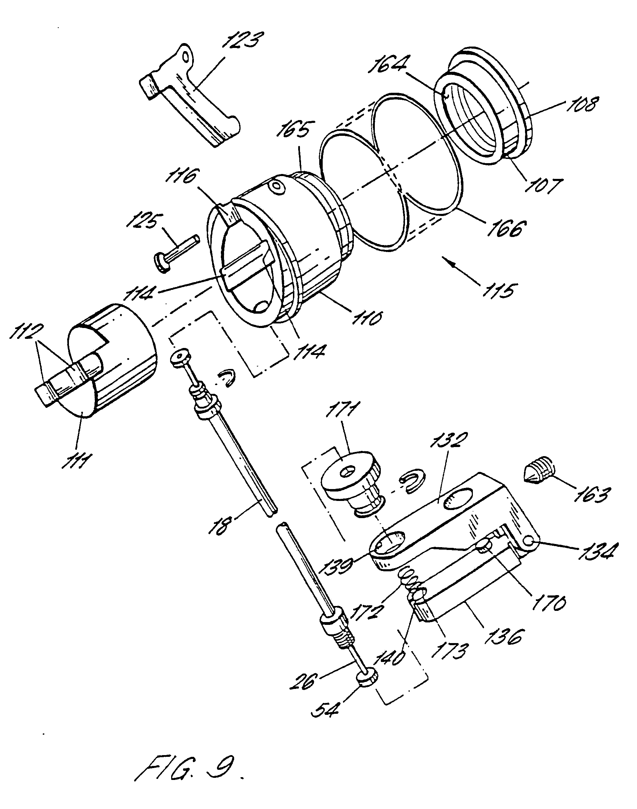

Figures 6, 7 and 8 show an alternative form of remote actuating unit 115 and lever actuating assembly 117. The remote actuating unit 115 comprises a cylindrical cover sleeve 107, which, when installed, bears with a flange 108 against the outside of the arm rest 14 (Figure 6), a spring washer 109 which bears against the inside of the wall of the arm rest 14 , a collar 110 surrounding the sleeve 107 and a push-button 111, which engages with diametrically opposite guide cams 112 into axial slits 113 of the sleeve 107.

The guide cams 12 project into inside-wall recesses 114, in register with the slits 113, of the collar 110 surrounding the sleeve 107. This ensures tilt-free guidance when the push-button 111 is pushed in and prevents slipping out forwards. In the collar 110 also, there are two aligned, opposite bores 90 and an axial longitudinal groove 116, with which are associated, accurately in position, bores 91 and an axial longitudinal groove 118 of the sleeve 107. At the upper ends of arms 119 of a U-shaped spring 120, inwardly pointing pins 121 are disposed. These engage in the bores 90, 91 respectively of the collar 110 and of the sleeve 107.

The spring 120 which is stressed (Figure 6) secures the remote actuating unit 115 in its installed position in the interior of the arm rest 14 where it is no longer accessible after installation. Portions of the arms of the spring 120 extend to within a short distance of rib-like external projections 122 on the upper edge of the collar 110. Before the start of installation or dismantling, the spring 120 is pushed parallel to the cable 18 and its arms slide over the projections 122 and disengage the collar 110 and the sleeve 107.

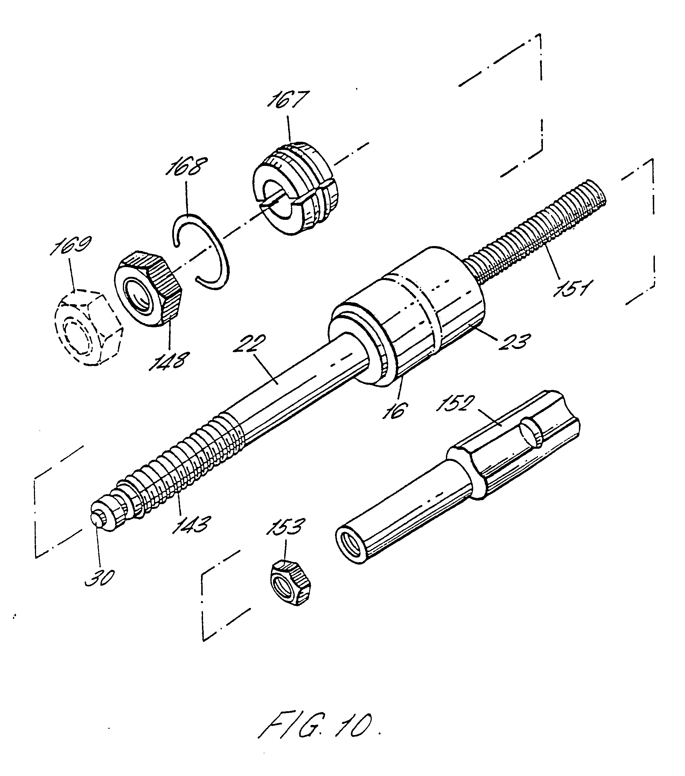

In the embodiment of the remote actuating unit 115 shown in Figure 9, the cover sleeve 107 has an internal screw-thread 164 and the collar 110 has a screw-threaded journal 165. The components 107 and 110 can be joined together by simply screwing the sleeve 107 on to the screw-threaded journal 165. A spring 166, which is pushed between them on to the screw-threaded journal 165, takes up any manufacturing clearances that there may be. An element securing the remote actuating unit 115 in position in the arm rest, for example the spring 120 shown in figures 6 and 7, is no longer necessary, because retention in the arm rest 14 is ensured by the screw connection.

A three-armed lever 123 has one arm pivotally journalled with a bearing flange 124 in the longitudinal groove 116, and is also seated by the axial longitudinal groove 118 of the sleeve 107. The lever 123 is secured by a pin 125, which passes through bores 126 transversely to the groove 116. The other two arms 127, 128 of the lever 123 are of different lengths and are approximately at right angles to each other. The longer arm 127, starting from the bearing point, i.e. the pin 125, bridges almost the entire internal diameter of the collar 110 and is approximately twice as long as the arm 128, which projects axially of the collar 110. The arm 127 has, at its outer end, a nose 129 and the lever 128 has a longitudinal slit continuing into a bore 130 and a shell-like depression 131.

The lever actuating assembly 117, which is mounted on the gas spring 16, which is in turn mounted on the seat frame at a distance from the remote actuating unit 15, comprises a rigid base arm 132 having a vertical rib 133, at the upper end of which a release lever 136 is pivotally journalled by a pin 135 which is pushed through a transverse bore 134 of the vertical rib 133. The base arm 132 has a bore 137, parallel to the rib 133, and the release lever 136 has a screw-threaded bore 138 aligned with the bore 137. Both the arm 132 and the lever136 have longitudinal slits 140, continuing at their forward end faces into bores 139.

A piston rod 22, which is guided in a cylinder 23 of the gas compression spring 16 illustrated in Figure 8, has a forward screw-threaded portion 143 and is provided with a stroke limiting sleeve 144. The cylindrical sleeve 144 is open at one end and is terminated at the other end by a base 145 having a bore 146 for the passage of the piston rod 22. It also has radial slits 147, disposed at spacing one from another. The sleeve 144 is pushed on to the piston rod 22 and is secured by nuts 148 and by a seat attachment, not shown, which enclose the base 145 between them. The maximum stroke of the piston rod 22 can then be limited as desired, depending upon which of the radial slits 147 a clip 149 is engaged in. When the piston rod 22 moves, the washer bears against the end wall 150 of the cylinder 23 and prevents further movement of the piston rod. The internal diameter of the sleeve 144 is somewhat larger than the external diameter of the cylinder 23 and it is pushed over the cylinder 23. Alternatively, a stroke limiting washer 167 of a desired length, illustrated in Figure 10, can be fixed as a stop on the piston rod 22 by a retaining ring 168, and be secured by the nuts 148 and also, if necessary, by a lock-nut 169. At the rear end of the cylinder 23, a screw-threaded rod 151 is disposed. A fork head 152 is screwed to a greater or lesser distance on to the cylinder 23 and is arrested in the desired limiting position by a nut153. A tension element, not illustrated, of the back rest of the seat can be connected to the fork head 152 by means of a bolt 154.

In their installed positions illustrated in Figure 6, the remote actuating unit 115 and the lever actuating assembly 117 connected together by the Bowden cable 18. The Bowden cable 18 is pushed at one end into a bore 155 of an axial wall projection 156 of the collar 110 and at the other end into the bore 139 of the base arm 132 where it is secured by washers. By means of an adjusting screw 157, the effective length of the inner cable 26 of the Bowden cable can be varied. The ends of the cable 26 have clamping bars 54, which after the cable ends have been hooked into the end slits 140 and the bores 139, 138 of the lever arms 128, 132, 136, are secured.

Adjustment of the inclination of the back rest is effected by pressing in the push-button 111, which, in moving inwards, slides with the guide cams 112 in the slit 113 of the sleeve 107 and the recesses 114 of the collar 110. The force on the button is transferred eccentrically via the nose 129 on to the lever arm 127 and the lever 123 is moved about the pin 125, so that the cable 26 of the Bowden cable 18 is pulled downwards by the lever arm 128. The release lever 136 thus shifts from the position shown in full lines in Figure 6 into the horizontal position shown in broken lines. The release lever 136 then cooperates, through an adjustment screw 160 screwed into the screw-threaded bore 138, with a release and locking member 30 of the gas compression spring 16. When the member 30 is pushed downwards as seen in Figure 6, the gas spring is free to expand or to be compressed by the application to it of a sufficient force and when the member 30 is released, the gas spring is locked rigid at the length at which it is set upon release of the member 30 taking place. The gas compression spring is secured by a screw-threaded part 162 in the bore 137 of the base arm 132. The screw-threaded part162 has a smaller diameter than the screw-threaded portion 143 of the piston rod 142 and is secured against loosening in the base arm 132 by a grub screw 163. The member 30 projects beyond the base arm132 out of the bore 138. The adjusting screw 160 can, alternatively, be replaced by a fixed bolt 170 of the release lever 136 as shown in Figure 9. Dimensional differences can then be taken up by an adjustment nut 171, which engages in the bore 139 of the base arm 132 and is connected to the cable 26 . A spring 172, which bridges across the distance between the base arm 132 and the release lever 136, bears against an end recess of the adjustment nut 171 and a recess 173 oriented coaxially with the bore 139 of the release lever 136. The spring 172 assists restoration of the piston rod 22 of the gas compression spring 16.

When the adjustment screw 30 comes into contact with the locking and release member of the piston rod 22, the rigid locking of the gas spring is cancelled, so that the back rest, provided it is being pushed or pulled, adjusts in its inclination, because the piston rod 22 is slid inwards or outwards in the cylinder 23 . As soon as the push-button 111 is released, the two-arm lever 123 returns to its starting position illustrated in Figure 6 under the tension force of the Bowden cable 18 and the release lever 136 of the lever actuating assembly 117 returns to the position shown in full lines in Figure 6, causing contact with the release and locking member 30 via the adjustment screw 160 to be interrupted. At the same instant, the gas compression spring 16 blocks any further adjustment in the inclination of the back rest.

A slight pushing-in of the push-button 111 takes place when blocking of the gas compression spring is released, due to the division into two parts of the transmission from the push-button to the adjustment screw 160 and the member 30. The lever ratio of 2:1 is determined, for a push-in distance of the push-button 111 of 10 mm, by adapting the distances from the point of action of the arm 127 with the nose 129 against the push-button 111 to the pivot point 125 and the point of action of the lever arm 128 against the bolt 159 of the cable to the pivot-point 125. The second transmission ratio of 4:1 in the lever actuating assembly 117 is determined by the distance of the pivot arm 136 from the point of action on the bolt 159 of the cable 26 to the pivot point 135 and the distance from the pivot-point 135 to the point of action of the adjustment screw 160.

The details of the gas spring 16 embodying features of the invention are best illustrated in FIG. 2. As shown therein, the gas spring 16 generally comprises a cylindrical housing or outer shell 23 and an inner working chamber 67 disposed therein. A first piston 68 and a second piston 69 are slidably and sealingly mounted within the working chamber 67 and divide the working chamber into three separate chambers, an intermediate chamber 70 between the first and second piston 68 and 69, a first end chamber 71 disposed on the side 72 of the first piston 68 opposite the intermediate chamber 70, and a second end chamber 73 disposed on the side 74 of the second piston 69 opposite the intermediate chamber 70. The inner end 75 of valve release rod 30 is slidably disposed within the axial bore of piston rod 22 and engages the tapered end 76 of the valve body 31 so that when the valve releasing rod 30 is pushed inwardly toward the valve body 31, it is lifted out of the valve seat provided, allowing hydraulic fluid within the working chamber 67 to pass through a central opening 77 in the valve seat and conduit 78 in the first piston 68 and to thereby flow between the intermediate chamber 70 and the first end chamber 71. Lifting the valve body 31 and allowing hydraulic fluid to flow therethrough forces the first piston 68 to move within the working chamber 67, and, as a result, the piston rod 22 attached thereto. Release of the valve release rod 30 resets valve body 31 into the valve seat to thereby lock the position of the first piston and the attached piston rod.

The second end chamber 73 is charged with compressed gas urging the second piston 69 toward the first piston 68 thereby maintaining the hydraulic fluid contained in the intermediate chamber 70 under pressure. The pressure of the compressed gas acting against the second piston 69 is chosen so that when the push button 25 of the remote actuating unit 15 is pushed, thereby lifting the valve body 31 from the valve seat and if no force is applied to the backrest 13 in the direction of the arrow 32 shown in FIG. 1, enought force will be generated on the piston rod 22 to pivot the backrest 13 to its upright position, shown in FIG. 1.

A guiding element 80 is provided within the gas spring housing 23 to engage the exterior of the piston rod 22 and guide the axial movement thereof within the housing. O-ring gaskets 81 and 82 are provided to prevent the escape of hydraulic fluid therethrough and a grease chamber 83 is positioned about the periphery of rod 22 to provide lubrication.

In accordance with a very important aspect of the invention, the opposite end 84 of the housing 23 is provided with a closing member 85 which has an interior passageway or conduit 86 which is blocked off with a plug 87 formed from a low melting point alloy which will melt at the elevated temperatures which the gas spring 16 might be exposed to in a fire situation. When the plug 87 melts, the compressed gas in the second end chamber escapes through the conduit 86 and thereby relieves the pressure within the working chamber 67. This allows the incompressible liquid within the working chamber 67 to expand and prevents the loss thereof from the gas spring 16. The low melting point plug 87 provided in the conduit 86 generally may be formed from a low melting point alloy such as alloys of tin, lead, cadmium, zinc and mixtures thereof. Typical melting points range from about 80° to 350° C.

The compressed gas within the second end chamber 73 should be a non-combustible gas such as nitrogen, helium, argon, and neon or mixtures thereof. Pressures of the compressed gas may range from about 40 to 60 bars. Preferably, a fire retardant is incorporated into the compressed gas which sufficiently interferes with the combustion process to retard combustion in the area surrounding the seat upon the escape thereof from the gas spring. The preferred fire retardant is bromotrifluoromethane which is essentially non-toxic to humans even in concentrations as high as 10% by volume and are very effective in preventing combustion and flame propagation. These fire retardants are sold under the trademark Halon 1301 by the DuPont Company. Under the normal pressures of the compressed gas, the brominated, fluorinated hydrocarbons may exist at least in part in the liquid state. In the event of a fire, the plug 87 will melt, the compressed gas will escape the gas spring and envelope a passenger sitting in the seat. The fire retardant, because of the lowered pressure, will very rapidly vaporize, thus preventing combustion in this vicinity. However, the surrounding gas will not have any detrimental effects on the passenger. If desired, additional conduits can be provided in fluid communication with conduit 86 to direct gas escaping from the second end chamber 73 around a passenger sitting in the seat.

If the hydraulic fluid in the intermediate chamber 70 and first end chamber 71 is replaced by a fluid containing brominated, fluorinated hydrocarbons, a conduit, such as conduit 86 is provided between the intermediate chamber 70 or first end chamber 71 (or both) with a low melting point plug therein, such as plug 87, to exhaust the fire retardant fluid when the temperature exceeds a predetermined maximum. If all of a substantial portion of the seating in an aircraft is provided with the gas spring in accordance with this invention, sufficient fire retardant can escape into the interior of the aircraft in the event of a fire to preclude further combustion.

While the invention has been described herein in connection with a passenger seat, it can be used in a wide variety of situations where the positional movement of one body with respect to another is controlled by an hydraulic cylinder. For example, the gas spring could be used in the overhead compartments in aircraft, trunk lids in automobiles, and many other uses.

## Claims

1. An actuator assembly having an elongate housing and an inner working chamber therein, and comprising first and second pistons slidably disposed within the inner working chamber and dividing the inner working chamber into three separate chambers, an intermediate chamber between the first and second pistons, a first end chamber adjacent the side of the first piston opposite the side adjacent the intermediate chamber and a second end chamber adjacent the side of the second piston opposite the side adjacent the intermediate chamber, the intermediate chamber and the first end chamber adapted to be filled with working liquid and the second end chamber adapted to be filled with compressed gas, a piston rod secured at one end thereof to the first piston and the other end thereof extending out of the elongate housing, valve means to control the flow of working liquid between the intermediate chamber and the first end chamber, and a conduit in fluid communication between the second end chamber and the exterior of the housing which is blocked off by a plug disposed therein, the plug being made of material which melts at a predetermined temperature thereby to unblock the conduit and permit the escape of compressed gas from the second end chamber.

2. An assembly as claimed in Claim 1 wherein the compressed gas is a non-combustible gas selected from the group consisting of nitrogen, helium, argon, and neon.

3. An assembly as claimed in Claim 1 or claim 2 wherein the compressed gas has incorporated therein a fire retardant.

4. An assembly as claimed in Claim 3 wherein the fire retardant is selected from the group consisting of brominated and fluorinated low molecular weight hydrocarbons.

5. An assembly as claimed in Claim 4 wherein the fire retardant is bromotrifluoromethane.

6. An assembly as claimed in Claim 4 wherein the fire retardant is dibromodifluoromethane.

7. An assembly as claimed in any preceding claim wherein the working liquid contains a brominated, fluorinated hydrocarbon.

8. An assembly as claimed in any preceding claim wherein the working liquid is selected from the group consisting of bromotrifluoromethane and dibromodifluoromethane.

9. An actuator assembly having an elongate housing and an inner working chamber therein, and comprising at least one piston slidably disposed within the inner working chamber and dividing the inner working chamber into at least two separate chambers, said chambers adapted to be filled with working fire retardant fluid, a piston rod secured at one end thereof to the piston and the other end thereof extending out of the elongate housing, valve means to control the flow of working fluid between the two chambers, a conduit in fluid communication between one of the two chambers and the exterior of the housing, and a low melting point plug disposed in the conduit acting normally to prevent the escape of said working fluid and operable at a predetermined temperature to allow said working fluid to exhaust from the chambers.

10. An assembly as claimed in Claim 9 wherein the working fire retardant fluid contains brominated, fluorinated hydrocarbons.

11. Apparatus for the adjustment and locking in position of a first member movably mounted relative to a second member, said apparatus including a pressure fluid operated device, eg gas compression spring, adapted to act between said first member and said second member, said device including a movable locking and release member and means for moving said locking and release member between a release position in which said device is free to expand or to be compressed and a locking position which said device is locked rigid, said means for moving said locking and release member including a manually operated push-button and a mechanical connecting means operatively connecting said push-button to said locking and release member, said connecting means including a first lever and means eccentrically loading said first lever for movement by said push-button.

12. Apparatus as claimed in Claim 11 in which said means for moving said locking and release member includes a release lever acting on said locking and release member and cable means operatively connecting said release lever to said first lever.

13. Apparatus as claimed in Claim 2, in which said push-button acts on said first lever with a lever ratio of about 2:1 and said release lever acts on said locking and release member with a lever ratio between said locking and release member and said cable means of about 4:1.

14. Apparatus as claimed in any one of claims 11 to 13 further comprising guide cams projecting in diametrically opposite positions from said push-button, a cylindrical cover sleeve, means defining slits in said cylindrical cover sleeve, said guide cams engaging in said slits, a collar surrounding said sleeve at least in the region of said slits and means defining recesses in said collar, said guide cams being seated in said recesses.

15. Apparatus as claimed in Claim 14, in which said push-button is slidingly seated in said collar and said collar includes screw-threaded journal means screwed to said cover sleeve.

16. Apparatus as claimed in Claim 15, further comprising spring means acting between said cover sleeve and said collar.

17. Apparatus as claimed in any one of claims 12 to 16 further comprising adjustment screw means, said release lever acting on said locking and release member through said adjustment screw means.

18. Apparatus as claimed in any one of claims 12 to 17 in which said cable means comprises a Bowden cable, means connecting one end of said Bowden cable to said first lever and means connecting the other end of said Bowden cable to said release lever.

19. Apparatus as claimed in any one of claims 11 to 18 in which said device includes a piston rod and stroke limiting means limiting the stroke of said piston rod, said stroke limiting means including a sleeve surrounding said piston rod, means defining spaced-apart slits in said sleeve and clip means insertable through any one of said slits to lock said sleeve to said piston rod in any one of a plurality of positions thereon.

20. Apparatus as claimed in any one of claims 11 to 19 in which said device includes a cylinder, a piston rod movably projecting from said cylinder at one end thereof and a screw-threaded rod projecting from the end of said cylidner remote from said piston rod, said screw-threaded rod being operative for adjustably fixing said cylinder to one of said firt and second members.

21. Apparatus as claimed in any one of claims 11 to 20 in which said device includes a piston rod and stroke limiting means for limiting the stroke of said piston rod, said stroke limiting means including stroke limiting washer means and retaining ring means for fixing said stroke limiting washer means on said piston rod in any one of a plurality of positions thereon.

22. Apparatus as claimed in any one of claims 12 to 21 in which said device includes a piston rod and further comprising a bolt, means fixing said bolt to said release lever, said bolt acting on said locking and release member, a base arm, means fixing said base arm to said piston rod, means pivotally mounting said release lever on said base arm and, said cable means consisting of a Bowden cable and a spring-loaded adjustment nut means adjustably connecting said Bowden cable to said base arm.

23. Apparatus for adjusting and locking the position of one member with respect to another member, comprising a pressure fluid operated device, eg gas spring assembly, having an elongate housing which is secured to one of said members and a piston rod extending out of the housing having a valve release actuator thereon and being secureed to the said other member, a remote actuating device having a push button, a pivotally mounted two-arm crank, one of said arms operatively engaging the back side of the push button and the other arm receiving one end of an operating cable, and a lever actuating assembly mounted to one of said members and including a mounting element, a lever arm pivotally mounted at one end thereof to the mounting element and having the other end of the operating cable removably secured to the free end of the lever arm, means on the lever arm to engage the valve release actuator on the piston rod, the mounting element having a first opening to receive the free end of the piston rod, a slotted receptacle adjacent and perpendicular to the first opening and adapted to receive a spring clip, the spring clip sliding through the receptacle to be mounted about a circumferential groove provided in the free end of the piston rod to thereby retain the free end of the piston rod in position so that movement of the operating cable caused by pressing on the push button of the remote actuating device will cause the lever arm to pivot and the means thereon to engage the valve release actuator to open a valve and allow movement of pressure fluid within the device.

24. Apparatus as claimed in Claim 23 wherein each end of the operating cable has provided thereon fittings which have a circumferential groove therein.

25. Apparatus as claimed in Claim 24 wherein the remote actuating device is provided with a housing to leave an opening therein adapted to receive the fitting on one of the ends of the operating cable and a spring clip engages the circumferential groove.

26. Apparatus as claimed in Claim 24 or Claim 25 wherein the mounting member of the lever actuating assembly is provided with an opening therein adapted to receive the fitting on the other end of the operating cable and a spring clip engages the circumferential groove.

27. Apparatus as claimed in Claim 25 or Claim 26 wherein at least one of the ends of the operating cable is provided with a threaded collar adapted to urge against the surface on a member opposite the side adjacent the spring clip engaging that end of the operating cable.

28. Apparatus as claimed in any one of claims 23 to 27 wherein the operating cable comprises an outer covering and a cable element positioned within the cable covering.

EP 0 329 455 A1

FIG. 1.

FIG. 5.

FIG. 4.

FIG. 3.

FIG. 2.

EP 0 329 455 A1

FIG. 6.

FIG. 7.

FIG. 8.

FIG. 9.

FIG. 10.

European Patent
Office

**EUROPEAN SEARCH REPORT**

Application Number

EP 89 30 1538

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 395 905 (AUTOMOTIVE) <br> * Page 2, line 80 - page 4, line 8; figures * | 1,2 | A 47 C 1/024 <br> B 64 D 25/04 |
| A | | 9 | |
| Y | FR-A-2 103 280 (NISSAN) <br> * Page 9, line 13 - page 10, line 34; page 11, lines 7-34; figures 1,2 * | 1,2 | |
| A | US-A-4 204 657 (GRAHAM) <br> * Column 7, lines 35-42; figure 12 * | 3,4 | |
| A | US-A-4 354 398 (PORTER) <br> * Column 4, line 37 - column 6, line 53; figures * | 11-28 | |

|  |  |
|---|---|
|  | TECHNICAL FIELDS SEARCHED (Int. Cl.4) |
|  | A 47 C <br> B 64 D |

The present search report has been drawn up for all claims

| Place of search | Date of completion of the search | Examiner |
|---|---|---|
| THE HAGUE | 17-05-1989 | VANDEVONDELE J.P.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)